# DEMANDE DE BREVET EUROPEEN

(11) **EP 1 798 058 A2**
(43) Date de publication de la demande: **20.06.2007**
(21) Numéro de dépôt: 06026180.7
(22) Date de dépôt: 18.12.2006
(51) Int. Cl.: B60B 27/02

(54) **Moyeu de roue et roue munie du moyeu**

(30) Priorité: 19.12.2005 FR 0512909
(71) Demandeur: Salomon S.A., 74370 Metz-Tessy (FR)
(72) Inventeur: Mercat, Jean-Pierre, 74650 Chavanod (FR)

(57) **Abrégé**

Moyeu (1) qui comprend un arbre (2), un corps creux (3) prévu pour accueillir l'arbre (2), ainsi qu'un premier roulement (4) et un deuxième roulement (5) pour guider le corps creux (3) en rotation relatitvement à l'arbre (2), les premier (4) et deuxième (5) roulements présentant respectivement une bague intérieure (25, 27) et une bague extérieure (26, 28) cylindriques, le corps creux (3) présentant une première (31) et une deuxième (33) portées cylindriques pour accueillir les bagues extérieures (26, 28) des roulements (4, 5).

Au niveau de l'un au moins des roulements (4, 5), l'arbre (2) présente une surface conique de révolution (71, 72), le moyeu (1) comprenant encore une bague intermédiaire (73, 74) prévue pour être logée entre la surface conique (71, 72) de l'arbre et la bague intérieure (25, 27) du roulement (4, 5), la bague intermédiaire (73, 74) présentant une surface intérieure conique (80) et une surface extérieure (81) cylindrique.

## Description

L'invention se rapporte au domaine des moyeux de roue, ainsi qu'à une roue munie d'un moyeu, ou d'un véhicule équipé d'un moyeu.

De tels moyeux sont destinés à une bicyclette, mais aussi à d'autres véhicules comme une motocyclette, une automobile, une poussette, un char à voile, ou autre.

De manière connue, un moyeu comprend un arbre de liaison au véhicule. Dans le cas de la bicyclette, l'arbre est relié à la fourche ou au cadre.

Le moyeu comprend aussi un corps creux pour accueillir l'arbre, ainsi qu'un premier roulement et un deuxième roulement pour guider le corps creux en rotation relativement à l'arbre. Bien entendu le corps creux est structuré pour recevoir un moyen de liaison à une jante, comme par exemple des rayons.

Il est classique d'utiliser des roulements présentant une bague intérieure et une bague extérieure cylindriques. Corrélativement l'arbre et le corps creux présentent des portées cylindriques, pour accueillir les bagues intérieures et extérieures des roulements.

Afin de réduire les jeux de fonctionnement, il est prévu un dispositif qui exerce une précontrainte axiale sur les roulements.

Cela correspond à un montage en contact oblique, pour rattraper les jeux axial et radial de chaque roulement.

Dans le cas de la bicyclette, l'arbre d'un moyeu est solidarisé à la fourche ou au cadre par blocage entre des bras. Le blocage contraint l'arbre en compression longitudinale, ce qui le raccourcit. Afin de réduire ou d'éviter une influence du blocage de l'arbre sur le montage des roulements, il est connu de monter les bagues intérieures des roulements glissantes sur l'arbre.

Par exemple on prévoit des tolérances de fabrication de 10 microns sur la bague intérieure d'un roulement, et de 20 microns sur les portées de l'arbre. Au cumul, le jeu radial entre l'arbre et la bague intérieure d'un roulement peut atteindre 30 microns. Ce jeu se retrouve sur chaque roulement. Des efforts latéraux sur une roue induisent des déplacements latéraux de la jante, qui se traduisent au niveau du moyeu par un désalignement de l'arbre. Compte-tenu du rapport de rayon entre un roulement et une roue, le jeu radial entre l'arbre et la bague induit un déplacement latéral de la jante de plusieurs dixièmes de millimètre. Le jeu fonctionnel nécessaire au niveau du moyeu est amplifié au niveau de la jante. Cela est bien entendu perceptible et gênant pour le roulage, notamment en ce qui concerne la précision de conduite.

En d'autres termes, le montage classique d'un moyeu autorise des désalignements parasites de l'arbre par rapport au corps creux.

Par rapport à ce montage classique, l'art antérieur a cherché à pallier l'inconvénient du désalignement.

Une solution est proposée par exemple par le document FR 2 771 370. Celui-ci décrit une liaison, de la bague intérieure d'un roulement à l'arbre, pour laquelle la bague intérieure est conique en regard de l'arbre. Ce dernier présente une surface conique de révolution au niveau du roulement. Ainsi le montage du roulement sur l'arbre se fait par liaison cône sur cône, ce qui supprime le jeu entre l'arbre et la bague intérieure du roulement. Cela résoud aussi le problème du désalignement. Mais le roulement est spécifique, c'est-à-dire non standard avec sa bague intérieure conique, et donc coûteux à fabriquer. De plus un ajustement conique rend le positionnement axial et le contrôle de l'arbre et du roulement beaucoup plus délicats.

Une autre solution est proposée par le document FR 2 825 320. Celui-ci fait appel à un écrou qui supporte la bague intérieure cylindrique d'un roulement. L'écrou se dilate radialement sous l'effet d'un serrage pour supprimer le jeu radial entre l'arbre et le roulement. Cela contribue à résoudre le problème du désalignement. Mais le serrage ou le desserrage de l'écrou est pénible à réaliser, à cause de l'intensité nécessaire.

Par rapport à cela, l'un des buts de l'invention est de simplifier et de faciliter le montage d'un moyeu pour lequel le jeu radial entre l'arbre et le roulement est nul.

Un autre but de l'invention est de réaliser un moyeu avec des roulements standards, c'est-à-dire dont les bagues intérieure et extérieure sont cylindriques.

Un autre but encore de l'invention est de faire en sorte que l'arbre et le corps creux du moyeu restent alignés.

Ainsi l'invention propose un moyeu qui comprend un arbre, un corps creux prévu pour accueillir l'arbre, ainsi qu'un premier roulement et un deuxième roulement pour guider le corps creux en rotation relativement à l'arbre, les premier et deuxième roulements présentant respectivement une bague intérieure et une bague extérieure cylindriques, le corps creux présentant une première et une deuxième portées cylindriques pour accueillir les bagues extérieures des roulements.

Le moyeu selon l'invention est caractérisé par le fait que, au niveau de l'un au moins des roulements, l'arbre présente une surface conique de révolution, le moyeu comprenant encore une bague intermédiaire prévue pour être logée entre la surface conique de l'arbre et la bague intérieure du roulement, la bague intermédiaire présentant une surface intérieure conique complémentaire de la surface conique de l'arbre, ainsi qu'une surface extérieure cylindrique.

La bague intermédiaire épouse la surface conique de l'arbre d'une part, et la surface cylindrique de la bague intérieure du roulement d'autre part. De ce fait elle empêche l'apparition d'un jeu radial entre l'arbre et le roulement. Autrement dit la bague intermédiaire maintient la bague intérieure du roulement sur l'arbre avec un jeu nul. Le maintien est durable parce que la bague intermédiaire reste en place par effet de coincement, en corrélation avec les valeurs d'angle des cônes.

La mise en place de la bague intermédiaire dans le moyeu est simple et facile. Il suffit de la glisser entre l'arbre et le roulement, au moment du montage. Ainsi c'est le montage du moyeu dans son ensemble qui est simple et facile, sans nécessiter d'effort particulier.

Aussi, le moyeu selon l'invention fait appel à des roulements dont les bagues intérieure et extérieure sont cylindriques. Cela en réduit le prix de revient.

D'autres caractéristiques et avantages de l'invention seront mieux compris à l'aide de la description qui va suivre, en regard du dessin annexé illustrant, par des formes de réalisation non limitatives, comment l'invention peut être réalisée, et dans lequel :
- la figure 1 est une vue en perspective éclatée d'un moyeu, selon une première forme de réalisation de l'invention,
- la figure 2 est une coupe longitudinale, selon l'axe de rotation, du moyeu de la figure 1,
- la figure 3 est une vue en perspective d'une bague intermédiaire et d'un moyen élastique représenté dans un état déformé pour le moyeu selon la première forme de réalisation de l'invention,
- la figure 4 est une vue de côté de la bague intermédiaire et du moyen élastique selon la figure 3, dans un cas où ce dernier est à l'état libre,
- la figure 5 est une vue de côté de la bague intermédiaire et du moyen élastique selon la figure 3, dans un cas où ce dernier est sollicité en compression,
- la figure 6 est une vue de côté d'une bague intermédiaire et d'un moyen élastique, pour une deuxième forme de réalisation de l'invention,
- la figure 7 est une vue de gauche de la bague et du moyen élastique de la figure 6,
- la figure 8 est une vue de droite de la bague et du moyen élastique de la figure 6.

Bien que les formes de réalisation concernent un moyeu adapté à une bicyclette, il doit être compris qu'elles ont trait également à des moyeux adaptés à d'autres véhicules comme évoqué avant.

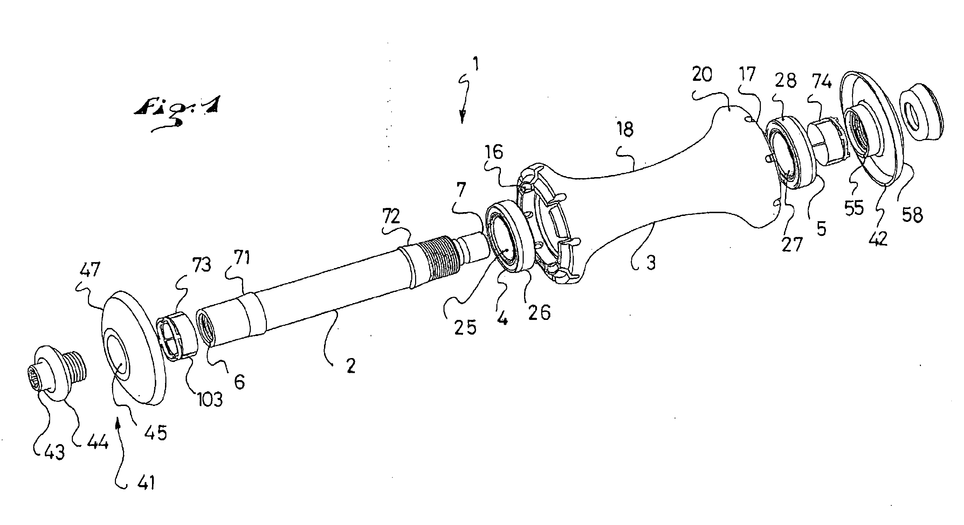

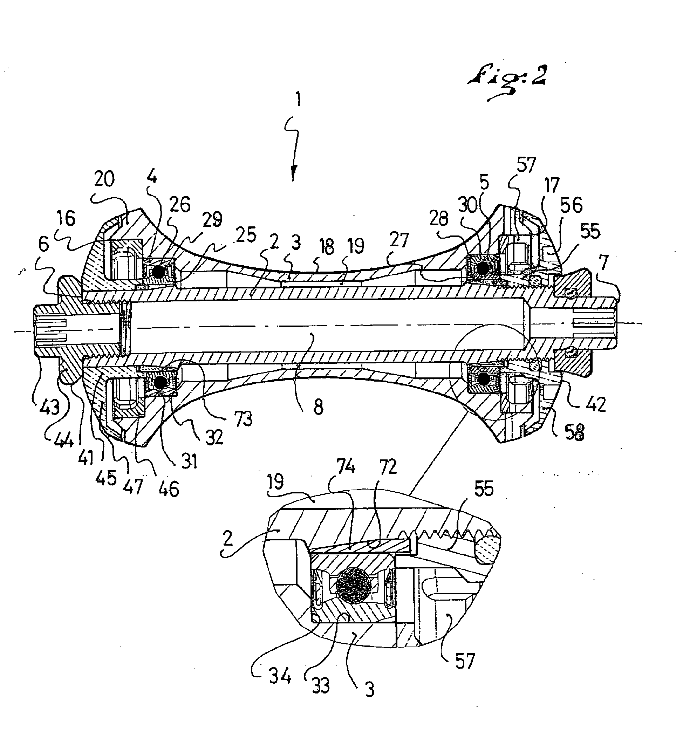

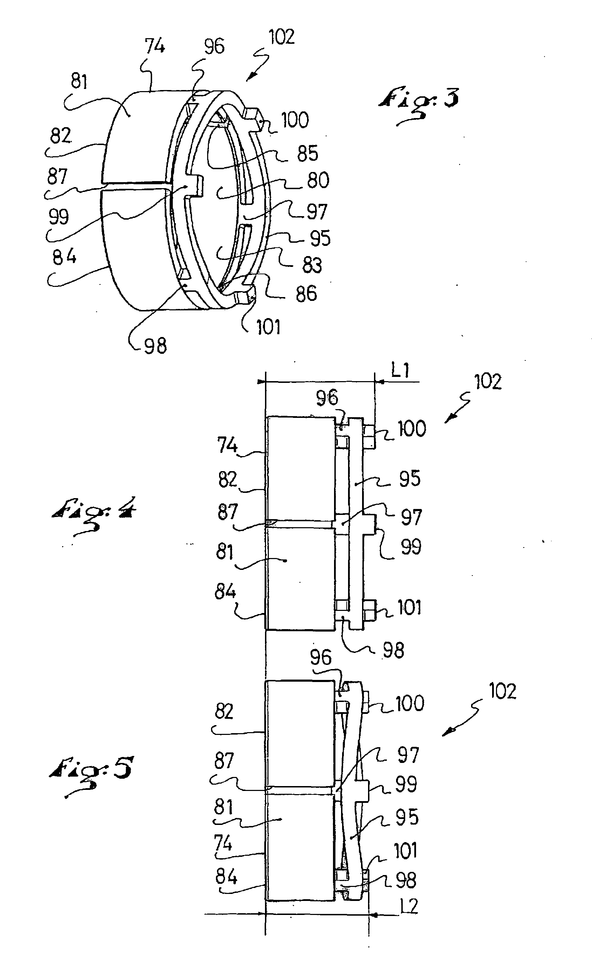

La première forme de réalisation est présentée à l'aide des figures 1 à 5.

Comme on le voit notamment sur les figures 1 et 2, un moyeu 1 comprend un arbre 2, un corps creux 3 prévu pour accueillir l'arbre, ainsi qu'un premier roulement 4 et un deuxième roulement 5 prévus pour guider le corps creux en rotation relativement à l'arbre.

De manière connue, l'arbre 2 est une pièce de révolution qui s'étend longitudinalement depuis une première extrémité 6 jusqu'à une deuxième extrémité 7. L'arbre 2 présente une cavité longitudinale ouverte 8, pour recevoir un axe de blocage rapide non représenté. L'arbre 2 peut être fabriqué à partir d'un tube, d'une barre, ou autre. Il peut comprendre une matière métallique, une matière plastique, ou autre.

Le corps creux 3 quant à lui est également une pièce de révolution, qui s'étend longitudinalement depuis une première extrémité 16 jusqu'à une deuxième extrémité 17. La forme générale du moyeu est celle d'un diabolo, avec les deux extrémités 16, 17 élargies et une portion centrale 18 rétrécie. Cependant d'autres formes, comme celle d'un cylindre ou d'une olive, peuvent convenir.

Bien entendu le corps creux 3 présente une cavité longitudinale ouverte 19, pour accueillir l'arbre 2.

Le corps creux 3 peut être fabriqué par exemple par usinage à partir d'un tube ou d'une barre, ou par fonderie puis reprise d'usinage, ou autre. Dans ce cas il comprend une matière métallique, ou une matière plastique. Alternativement, il peut par exemple être prévu que le corps creux comprenne des fibres composites imprégnées de résine.

De manière non limitative, chaque extrémité 16, 17 du corps ceux 3 présente des créneaux 20. Ces derniers font partie d'un dispositif de liaison du corps creux 3 à des rayons non représentés. Bien entendu, il peut alternativement être prévu une autre structure de dispositif de liaison. Par exemple ce dernier peut comprendre des disques avec des perçages, pour l'accueil des rayons.

Les roulements 4, 5 guident le corps creux 3 par rapport à l'arbre 2 de la manière suivante.

Chaque roulement 4, 5 est de type cylindrique. Ainsi le premier roulement 4 comprend une bague intérieure 25 cylindrique et une bague extérieure 26 cylindrique. Par analogie le deuxième roulement 5 comprend une bague intérieure 27 cylindrique et une bague extérieure 28 cylindrique.

Chaque roulement 4, 5 est à contact radial. Une rangée de billes 29, 30 est logée respectivement entre la bague intérieure 25, 27 et la bague extérieure 26, 28 de chaque roulement. Cela réduit le prix du moyeu, car les roulements sont peu coûteux à fabriquer.

Les roulements 4, 5 sont montés serrés dans le corps creux 3. Ainsi ce dernier 3 présente une première portée cylindrique 31 et un premier épaulement 32, pour accueillir la bague extérieure 26 du premier roulement 4, vers la première extrémité 16. Par analogie le corps creux 3 présente une deuxième portée cylindrique 33 et un deuxième épaulement 34, pour accueillir la bague extérieure 28 du deuxième roulement 5, vers la deuxième extrémité 17. Chaque épaulement 32, 34 limite la pénétration du roulement 4, 5 dans la cavité 19 du corps creux 3.

Le moyeu 1 comprend aussi un dispositif qui permet d'exercer une précontrainte axiale sur les roulements. Ce dispositif comprend, au niveau de l'arbre 2, une première butée 41 vers la première extrémité 6, ainsi qu'une deuxième butée 42 vers la deuxième extrémité 7. Chaque butée 41, 42 s'oppose à un déplacement longitudinal de l'arbre 2 par rapport au corps creux 3. Cela permet de maintenir l'arbre 2 longitudinalement par rapport au corps creux 3.

La première butée 41 comprend par exemple une vis 43 et un épaulement 44 assujetti à la vis. Plus précisément l'épaulement 44 et la vis 43 forment une pièce monobloc. La vis 43 est vissée dans la cavité 8 de façon que l'épaulement 44 appuie sur la première extrémité 6. Une entretoise 45 relie l'épaulement 44 et la bague intérieure 25 du premier roulement 4. L'entretoise 45 est un cylindre emboîté sur l'arbre. L'entretoise 45 ménage un espace d'accueil d'une première couronne 46, entre l'extrémité 6 et le roulement 4. La première couronne 46 est structurée pour supporter des rayons. La couronne 46 peut comprendre un matériau tel que de l'acier. Ainsi les rayons n'appuient pas directement sur le corps de moyeu 3. Cela préserve le moyeu mécaniquement, en évitant les concentrations de contraintes. En complément une première coupelle 47 protège la couronne. La coupelle 47 et l'entretoise 45 forment une pièce monobloc, mais il peut alternativement être prévu qu'elles soient distinctes.

Des alternatives de construction pourraient être de se passer de la couronne, de la coupelle, ou des deux. Dans ce cas l'entretoise peut être supprimée et le roulement décalé vers la première extrémité 6.

Ainsi structurée la première butée 41 s'oppose à un déplacement de l'arbre 2, par rapport au corps creux 3, dans un sens qui va de la première extrémité 16 à la deuxième extrémité 17.

La première butée 41 comprend plusieurs pièces 43, 45 amovibles par rapport à l'arbre 2. Il peut alternativement être prévu que la butée soit non amovible, par exemple en formant une pièce monobloc avec l'arbre 2. En d'autres termes ce dernier peut comprendre un épaulement prévu pour contacter la bague intérieure 25 du côté de la première extrémité 16. Dans ce cas la bague intermédiaire doit pouvoir se dilater au montage pour être placée sur le cône de l'arbre. Alternativement la bague intermédiaire peut comprendre plusieurs parties assemblées au montage.

La deuxième butée 42 quant à elle comprend par exemple un écrou 55, lequel est vissé sur l'arbre 2 pour appuyer sur la bague intérieure 27 du deuxième roulement 5. L'écrou 55 est actionné par exemple par une clé à ergots, lesquels coopèrent avec des orifices 56 de l'écrou 55. Bien entendu, l'écrou 55 sollicite la bague intérieure 27 dans un sens de rapprochement de la première extrémité 6. Au final, le serrage de l'écrou 55 sollicite les bagues intérieures 25, 27 des roulements 4, 5 l'une vers l'autre. Bien entendu le serrage est contrôlé, par exemple à l'aide d'une clé dynamométrique, d'un appareil de mesure de propagation d'ondes acoustiques, ou autre. Les jeux radiaux et axiaux des roulements 4, 5 sont amenés à une valeur nulle ou légèrement positive. En fait, pour l'utilisation du moyeu sur un vélo, on laisse un petit jeu sur le moyeu libre. Ainsi lorsque la roue est montée sur le vélo avec le mécanisme de blocage rapide bloqué, le jeu devient alors nul. Si une roue démontée est réglée avec un léger jeu, la contrainte liée au blocage rapide atténue ou supprime le jeu. Il peut aussi être prévu d'exercer une précontrainte à l'aide du dispositif. Ainsi lorsque l'arbre 2 du moyeu 1 sera sollicité longitudinalement, après montage sur un véhicule, les jeux radiaux et axiaux des roulements resteront nuls. Cela améliore la précision de guidage en rotation du moyeu.

De manière complémentaire, il est aussi prévu une deuxième couronne 57 et une coupelle 58. Là encore la couronne et la coupelle 58 ne sont pas obligatoires.

L'écrou 55 et la coupelle 58 forment une pièce monobloc, mais elles peuvent alternativement être distinctes.

Selon l'invention, au niveau de l'un au moins des roulements 4, 5, l'arbre 2 présente une surface conique de révolution 71, 72, le moyeu 1 comprenant encore une bague intermédiaire 73, 74 prévue pour être logée entre la surface conique 71, 72 de l'arbre 2 et la bague intérieure 25, 27 du roulement 4, 5, la bague intermédiaire 73, 74 présentant une surface intérieure 80 conique et une surface extérieure 81 cylindrique.

La bague intermédiaire vient en contact d'une part avec la surface conique de l'arbre 2 et, d'autre part, avec la surface cylindrique de la bague intérieure du roulement 4, 5. Les surfaces coniques 71, 72, 80 des bagues intermédiaires 73, 74 et de l'arbre 2 sont complémentaires, dans le sens où elles présentent sensiblement le même angle de conicité. Compte tenu de la géométrie des pièces, la bague intermédiaire est maintenue par coincement entre l'arbre 2 et la bague intérieure 25, 27 du roulement 4, 5. Le maintien se fait avec un jeu nul entre l'arbre 2 et la bague intérieure 25, 27.

Selon la première forme de réalisation de l'invention, l'arbre 2 présente une première surface conique de révolution 71 du côté de l'extrémité 6. Le sommet du cône de révolution de cette surface 71 est plus éloigné de la deuxième extrémité 7 que ne l'est la surface 71 elle-même. Par analogie l'arbre 2 présente une deuxième surface conique de révolution 72 du côté de l'extrémité 7. Le sommet du cône de révolution de cette surface 72 est plus éloigné de la première extrémité 6 que ne l'est la surface 72 elle-même. En d'autres termes les deux surfaces coniques présentent des points de convergence orientés dans des directions inverses l'une par rapport à l'autre, vers l'extérieur du moyeu 1.

Chaque surface 71, 72 est ménagée directement sur l'arbre 2, par toute technique connue de l'homme du métier. Par exemple un usinage convient très bien.

Une première bague intermédiaire 73 est logée entre la première surface conique 71 et la bague intérieure 25. De même une deuxième bague intermédiaire 74 est logée entre la deuxième surface conique 72 et la bague intérieure 27.

Pour des raisons de commodité seule l'une des bagues intermédiaires, par exemple la deuxième 74, va être décrite plus en détail ci-après. Mais il doit être compris que ce qui est valable pour l'une 74 l'est aussi pour l'autre 73.

Comme on le comprend à l'aide de l'ensemble des figures 1 à 5 la deuxième bague intermédiaire 74 présente une surface intérieure 80 conique, ainsi qu'une surface extérieure 81 cylindrique. La surface conique 80 de la bague intermédiaire prend appui sur la surface conique 72 de l'arbre. La surface cylindrique 81 de la bague, quant à elle, prend appui sur la bague intérieure 27 du deuxième roulement 5. En fait la deuxième bague intermédiaire est coincée entre l'arbre 2 et le roulement 5 lors du montage du moyeu, comme on le comprendra mieux après. Le coincement supprime tout jeu entre l'arbre 2 et le roulement 5.

Pour améliorer encore l'effet de coincement, il est prévu que la bague intermédiaire 74 soit expansible. Pour cela elle 74 comprend par exemple des segments qui peuvent bouger les uns par rapport aux autres.

Selon la première forme de réalisation de l'invention, la bague intermédiaire 74 comprend par exemple trois segments, soit successivement un premier 82, un deuxième 83; et un troisième 84 segments. Ces segments sont séparés les uns des autres par trois interstices 85, 86, 87. En fonction de la position de la bague 74 par rapport à la surface conique 72, les interstices sont plus ou moins ouverts. L'enfoncement de la bague 74 dans le moyeu provoque une augmentation de son diamètre. Cette augmentation est facilitée par les interstices. Le coincement est donc meilleur.

Pour assurer la cohésion de la bague 74, c'est-à-dire faire en sorte que les segments restent solidarisés les uns aux autres, il est prévu un moyen de liaison des segments. De manière non limitative, le moyen de liaison comprend un anneau 95 relié à chacun des segments 82, 83, 84 par un pont 96, 97, 98.

Pour faciliter la mise en place de la bague intermédiaire 74 dans le moyeu lors du montage, comme on le verra après, le moyeu 1 comprend un moyen élastique prévu pour solliciter la bague intermédiaire 74 dans un sens de coincement entre la surface conique 72 de l'arbre 2 et la bague intérieure 27 du roulement 5. Le moyen élastique, grâce à son élasticité, permet simultanément l'appui de l'écrou 55 sur la bague intérieure 27 du deuxième roulement 5 et la sollicitation de la bague intermédiaire 74. Le moyen élastique compense des tolérances de fabrication des pièces constitutives du moyeu 1. De manière non limitative, le moyen élastique comprend l'anneau 95, ainsi que trois pieds 99, 100, 101 solidarisés à l'anneau et orientés dans un sens d'éloignement des segments 82, 83, 84. Les pieds 99, 100, 101 sont disposés en alternance par rapport aux trois ponts 96, 97, 98. Ainsi la bague intermédiaire 74 et le moyen élastique sont solidarisés l'un à l'autre. L'anneau élastique 95 travaille en flexion entre les ponts 96, 97, 98 et les pieds 99, 100, 101.

Selon la première forme de réalisation de l'invention, les segments 82, 83, 84, l'anneau 95, les ponts 96,97,98 et les pieds 99, 100, 101 forment une pièce 102 monobloc. Cette pièce peut comprendre une matière synthétique ou un métal. D'une manière plus générale, la bague intermédiaire 74 et le moyen élastique forment une pièce monobloc.

Bien entendu, il peut alternativement être prévu que la pièce 102 ne soit pas monobloc, et que les éléments ou certains d'entre-eux soient solidarisés l'un à l'autre par tout moyen tel qu'un collage ou une soudure.

Le montage et le fonctionnement du moyeu sont expliqués ci-après.

Pour le montage, les roulements 4, 5 sont mis en place sur les portées cylindriques 31, 33 et contre les épaulements 32, 34 du corps creux 3. Une pièce 103, similaire à la pièce 102, est mise en place sur l'arbre 2 par introduction du côté de la première extrémité 6. Puis la première butée 41 est solidarisée à l'arbre 2 en retenant la pièce 103. Il convient d'introduire l'entretoise 45 avant de visser la vis 43. Ensuite l'arbre 2 est introduit dans la cavité 19 du corps creux 3 du côté de la première extrémité 16. Ensuite, la pièce 102 est introduite sur l'arbre 2 du côté de la deuxième extrémité 7. Enfin la deuxième butée 42 est mise en place.

Le montage se fait essentiellement à la main, sans contrainte particulière.

La précontrainte des roulements 4, 5 est obtenue par un serrage contrôlé du dispositif, en l'occurrence par action sur l'écrou 55. Ainsi les jeux axiaux et radiaux des roulements disparaissent.

La suppression de tout jeu entre l'arbre 2 et les bagues intérieures 25, 27 est obtenue par action des bagues intermédiaires 73, 74, avec l'aide des moyens élastiques 95, 99, 100, 101.

Plus précisément, l'écrou 55 de la deuxième butée sollicite également le moyen élastique et la bague intermédiaire 74 vers la surface conique 72 de l'arbre 2. Pour cela les trois pieds 99, 100, 101 prennent appui sur l'écrou 55 pour repousser l'anneau 95 et les segments 82, 83, 84. Les pièces sont dimensionnées pour que, après réglage des jeux des roulements, le moyen élastique soit déformé sans être comprimé totalement.

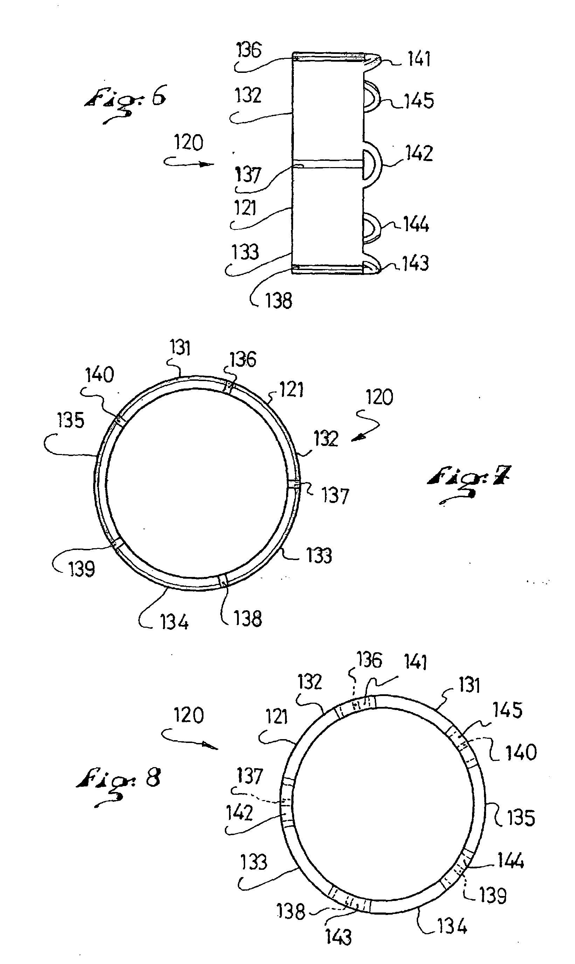

Ce phénomène est montré à l'aide des figures 4 et 5.

A l'état libre, comme on le voit sur la figure 4, le moyen élastique n'est pas sollicité. L'anneau 95 est plat, et la pièce 102 présente une longueur L1 de référence.

Lorsqu'il est sollicité après montage, comme c'est le cas sur la figure 5, le moyen élastique est déformé dans un sens de compression. Les trois pieds 99, 100, 101, en prenant appui sur l'écrou 55, poussent des portions de l'anneau 95 vers les segments 82, 83, 84. La pièce 102 présente alors une longueur L2, de travail, inférieure à celle de référence L1. Cela se traduit visuellement par des ondulations périphériques sur l'anneau 95. Les ondulations correspondent à des déformations élastiques réversibles de l'anneau 95.

Bien entendu le phénomène se produit aussi au niveau du premier roulement 4, où la vis 43 agit sur la pièce 103.

Ainsi les jeux radiaux sont supprimés entre l'arbre et chacun des roulements. Cela améliore considérablement la précision de guidage en rotation du corps creux 3 relativement à l'arbre 2. Le moyen élastique a une course de travail suffisante pour compenser toutes les tolérances d'usinage des différentes pièces. Par exemple la pièce 102 peut présenter une course élastique axiale supérieure à la pièce 103, car elle compense en plus les jeux axiaux des roulements, la tolérance entres les épaulements 32, 34 du corps creux 3, et la tolérance axiale entre les deux cônes 71, 72 de l'arbre 2. Ainsi pour satisfaire toutes les conditions d'assemblage, une course minimale de 0,7 millimètre est souhaitable pour la pièce 102, alors qu'une course plus réduite suffit pour la pièce 103, par exemple supérieure ou égale à 0,3 millimètre.

Il a été observé que le guidage est d'autant meilleur que le coincement des bagues intermédiaires 73, 74 n'est pas réversible. En effet il ne faut pas qu'une charge radiale importante sur un des roulements fasse reculer la bague intermédiaire et induise alors un gros jeu radial. Il faut donc qu'un effort radial ne permette pas, par irréversibilité, un déplacement de la bague intermédiaire. Pour cela, une conicité des surfaces coniques 71, 72 comprise entre 5 et 10 degrés convient bien. Bien sûr la conicité peut prendre en compte les matériaux utilisés, notamment en ce qui concerne les coefficients de frottement. Pour un arbre comprenant de l'acier, une conicité de l'ordre de 7 degrés est appropriée.

La deuxième forme de réalisation de l'invention est présentée à l'aide des figures 6 à 8.

Pour des raisons de commodité, ce sont principalement ses spécificités par rapport à la première forme qui sont mises en évidence.

Une pièce 120 comprend une bague intermédiaire 121 et un moyen élastique.

A nouveau la bague 121 comprend plusieurs segments, par exemple au nombre de cinq, soit un premier 131, un deuxième 132, un troisième 133, un quatrième 134 et un cinquième 135 segments. Par corrélation on retrouve cinq interstices, soit un premier 136, un deuxième 137, un troisième 138, un quatrième 139, et un cinquième 140 interstices.

Un moyen de liaison des segments comprend cinq ponts 141, 142, 143, 144, 145 qui relient les segments les uns aux autres. Les ponts présentent par exemple une forme d'arche, mais d'autres formes pourraient convenir.

Le moyen élastique comprend les ponts 141, 142, 143, 144, 145. Ces derniers assurent donc deux fonctions, celle de liaison entre deux segments, et celle de sollicitation des segments 131 à 135 dans un sens de coincement. On peut dire qu'une arche se comporte comme un ressort.

Le montage et le rôle de la pièce 120 sont analogues à ce qu'ils sont dans la première forme de réalisation.

Pour toutes les formes de réalisation, l'invention est réalisée à partir de matériaux et selon des techniques de mise en oeuvre connus de l'homme du métier.

Bien entendu, l'invention n'est pas limitée aux formes de réalisation ci-avant décrites, et comprend tous les équivalents pouvant entrer dans la portée des revendications qui vont suivre.

En particulier une bague intermédiaire peut être indépendante d'un moyen élastique, ou au contraire y être solidarisée.

Une pièce comprenant une bague intermédiaire, un moyen de liaison et un moyen élastique peut être monobloc, ou au contraire comprendre plusieurs parties.

Une bague intermédiaire et / ou un moyen élastique peuvent être fendues dans le sens de la longueur, pour être introduits sur l'arbre d'un côté opposé au sommet d'un cône d'une surface conique.

Les roulements pourraient être à contact oblique, au lieu d'être à contact radial.

La bague intermédiaire peut être continue sur sa périphérie, c'est-à-dire ne pas comprendre de segments et d'interstices. Dans ce cas elle peut comprendre une matière synthétique, thermoplastique ou non.

Chaque surface conique 71, 72 sur l'arbre peut être obtenue par une bague frettée.

Dans ce cas la surface conique est rapportée sur l'arbre.

## Revendications

1. Moyeu (1) qui comprend un arbre (2), un corps creux (3) prévu pour accueillir l'arbre (2), ainsi qu'un premier roulement (4) et un deuxième roulement (5) pour guider le corps creux (3) en rotation relativement à l'arbre (2), les premier (4) et deuxième (5) roulements présentant respectivement une bague intérieure (25, 27) et une bague extérieure (26, 28) cylindriques, le corps creux (3) présentant une première (31) et une deuxième (33) portées cylindriques pour accueillir les bagues extérieures (26, 28) des roulements (4, 5), **caractérisé par le fait que**, au niveau de l'un au moins des roulements (4, 5), l'arbre (2) présente une surface conique de révolution (71, 72), le moyeu (1) comprenant encore une bague intermédiaire (73, 74, 121) prévue pour être logée entre la surface conique (71, 72) de l'arbre et la bague intérieure (25, 27) du roulement (4, 5), la bague intermédiaire (73, 74, 121) présentant une surface intérieure (80) conique complémentaire de la surface conique (71, 72) de l'arbre (2), ainsi qu'une surface extérieure (81) cylindrique.

2. Moyeu (1) selon la revendication 1, **caractérisé par le fait que** la bague intermédiaire (73, 74, 121) est expansible.

3. Moyeu (1) selon la revendication 1 ou 2, **caractérisé par le fait que** la bague intermédiaire (73, 74) comprend un premier (82), un deuxième (83), et un troisième (84) segments, ainsi qu'un anneau (95) relié à chacun des segments.

4. Moyeu (1) selon la revendication 1 ou 2, **caractérisé par le fait que** la bague intermédiaire (121) comprend cinq segments (131 à 135) et cinq ponts (141 à 145) qui relient les segments les uns aux autres.

5. Moyeu (1) selon l'une des revendications 1 à 4, **caractérisé par le fait qu'**il comprend un moyen élastique prévu pour solliciter la bague intermédiaire (73, 74, 121) dans un sens de coincement entre la surface conique (71, 72) de l'arbre et la bague intérieure (25, 27) du roulement (4,5).

6. Moyeu (1) selon la revendication 5, **caractérisé par le fait que** le moyen élastique comprend l'anneau (95) ainsi que des pieds (99, 100, 101) solidarisés à l'anneau.

7. Moyeu (1) selon la revendication 5 ou 6, **caractérisé par le fait que** la bague intermédiaire (73, 74, 121) et le moyen élastique sont solidarisés l'un à l'autre.

8. Moyeu (1) selon l'une des revendications 5 à 7, **caractérisé par le fait que** la bague intermédiaire (73, 74, 121) et le moyen élastique forment une pièce monobloc.

9. Moyeu (1) selon l'une des revendications 1 à 8, **caractérisé par le fait que** l'arbre (2) présente une première (71) et une deuxième (72) surfaces coniques de révolution, les deux surfaces (71, 72) présentant des points de convergence orientés dans des directions inverses l'une par rapport à l'autre.

10. Moyeu (1) selon l'une des revendications 1 à 9, **caractérisé par le fait que** les roulements (4, 5) sont à contact radial, et **par le fait qu'**il comprend un dispositif qui permet d'exercer une précontrainte axiale sur les roulements.
